# FASCICULE DE BREVET EUROPEEN

(11) **EP 4 043 184 B1**
(45) Date de publication et mention de la délivrance du brevet: **20.12.2023**
(21) Numéro de dépôt: 22166127.5
(22) Date de dépôt: 05.11.2019
(51) Int. Cl.: B29C 59/02, B29C 37/00, D06N 3/00, D06N 3/10

(54) **ARTICLE EN ÉLASTOMÈRE COMPORTANT UNE SURFACE TEXTURÉE DE TYPE VELOURS ET PROCÉDÉ DE RÉALISATION D'UN TEL ARTICLE**
ARTIKEL AUS ELASTOMER MIT EINER TEXTURIERTEN SAMTARTIGEN OBERFLÄCHE UND VERFAHREN ZUR HERSTELLUNG EINES SOLCHEN ARTIKELS
ELASTOMER ITEM COMPRISING A TEXTURED SURFACE SUCH AS VELVET AND METHOD FOR MANUFACTURING SUCH AN ITEM

(43) Date de publication de la demande: 17.08.2022
(62) Demande divisionnaire de: 19802113.1
(73) Titulaire: BIWI S.A., 2855 Glovelier (CH)
(72) Inventeur: BOURQUARD, Pascal, 2854 Bassecourt (CH)
(74) Mandataire: Bovard SA Neuchâtel

(56) Documents cités:
- WO-A1-98/00075
- FR-A1- 2 918 677
- US-A1- 2012 027 990

## Description

### Domaine technique

La présente invention se rapporte au domaine de la fabrication de pièces en élastomère ou matériaux thermoplastiques. Elle concerne plus particulièrement un article en matériau élastomère comportant une surface texturée de type velours selon la revendication 1 et un procédé de réalisation d'un tel article selon la revendication 7.

L'invention peut s'appliquer de manière avantageuse à tout domaine industriel, pour la réalisation d'articles en tous genres comprenant un élément en matériau élastomère. Elle s'appliquera dans une application privilégiée à la réalisation de pièces d'habillage pour l'horlogerie, et notamment la réalisation de bracelets, ainsi qu'à d'autres applications diverses mettant en oeuvre des pièces élastomères ou thermoplastiques moulées telles que la maroquinerie, la cordonnerie, le packaging, les intérieurs automobiles, la décoration, les biens de consommation et téléphonie, entre autres.

### Etat de la technique

Il existe aujourd'hui dans le commerce de nombreux produits commerciaux fabriqués à partir de matériaux élastomères tels que du caoutchouc. A titre d'exemple on pourra citer les pneumatiques, des articles de cuisine, de bricolage, ou encore d'ameublement, ainsi que des articles d'habillage et/ou de protection d'autres produits, comme des bracelets de montres ou des coques de téléphone portable. Ces produits sont usuellement formés par injection et/ou moulage d'une ou plusieurs matières élastomères dans des moules de forme idoine chauffés de 150°C jusqu'à 300°C selon les matières et leurs épaisseurs suivant des durées variables afin de réaliser leur vulcanisation. Les pièces obtenues de moulage peuvent présenter un état de surface lisse et/ou texturé selon la forme et la texturation interne des moules utilisés. Il est en outre possible par un traitement ultérieur, notamment par ablation laser ou mécanique, de créer des états de surfaces plus ou moins grossiers et/ou plus ou moins rugueux au toucher.

Un désagrément communément énoncé pour des articles et pièces en matériaux élastomère réside, tout particulièrement pour des articles d'habillage, précisément dans leur rendu visuel et leur toucher perçu comme non qualitatif en raison de leur rugosité, voire leur adhérence, inhérente à la matière dont ils sont réalisés. Par exemple, dans le document US 2012/0027990 A1, il est décrit un article, selon le préambule de la revendication 1, ayant des propriétés frictionnelles qui se dégradent peu en présence d'eau. Des bâtonnets flexibles se dressent sur une surface de cet article et sont faits, en tout ou partie, d'élastomère thermoplastique ou vulcanisé.

La présente invention a pour but de procurer un article en matériau élastomère qui ne souffre pas les défauts énoncés ci-dessus et notamment présente un toucher soyeux, agréable, de type velours, analogue à celui produit par des pièces analogues en matière textiles.

### Divulgation de l'invention

Pour atteindre ces buts, l'invention concerne un procédé dont les caractéristiques sont mentionnées dans les revendications.

Plus particulièrement, et selon un premier objet, l'invention propose une article manufacturé formé essentiellement d'un matériau élastomère par exemple vulcanisé, ledit article présentant au moins une surface visible comportant sur au moins une portion texturée une pluralité de brins s'étendant depuis une base de ladite surface et répartis sur la totalité de ladite portion, chaque brin ayant une hauteur moyenne A mesurée depuis ladite base jusqu'à une extrémité libre du brin telle que 0,250 mm ≤ A ≤ 0,600 mm et une largeur moyenne B à la base telle que 0,070 mm ≤ B ≤ 0,170 mm, la densité des brins sur la portion texturée est au moins égale à 10 brins par unité de surface exprimée en millimètre carré (mm2 ), l'angle moyen à l'extrémité libre des brins, mesuré à l'intersection entre les tangentes aux surfaces du brin à ladite extrémité dans une section longitudinale étant compris entre 6° et 30°.

Selon un mode de réalisation, le diamètre moyen des brins à mi-hauteur est compris entre 0,025 mm et 0,060 mm.

Selon un mode de réalisation, la section de chaque brin diminue en allant de la base du brin vers l'extrémité dudit brin.

Selon un mode de réalisation, l'entraxe entre les centres des bases de deux brins consécutifs suivant deux directions orthogonales dans le plan de la surface est compris entre 0,075 mm et 0,300 mm.

De préférence, quel que soit le mode de réalisation précédemment présenté, l'article est formé en matériau caoutchoutique, la pluralité de brins du motif étant formée dans le même matériau est venue de matière à la surface dudit matériau. Alternativement, l'article peut être formé d'un matériau thermoplastique.

Avantageusement, l'article de l'invention pourra être un brin de bracelet, notamment de bracelet de montre.

L'invention concerne par ailleurs, selon un second objet, un procédé de fabrication d'un article manufacturé tel que précédemment introduit, caractérisé en ce qu'il consiste à mouler un matériau élastomère dans un moule dont une surface de moulage comporte sur au moins une portion de surface de moulage une pluralité de cavités ayant une hauteur moyenne h mesurée depuis ladite base jusqu'à une extrémité libre du brin telle que 0,250 mm ≤ h ≤ 0,600 mm et une largeur moyenne l à la base telle que 0,070 mm ≤ l ≤ 0,170 mm, la densité des cavités étant au moins égale à 10 par unité de surface exprimée en millimètre carré (mm2 ), l'angle moyen à l'extrémité libre des cavités, mesuré à l'intersection entre les tangentes aux surfaces de la cavité à ladite extrémité dans une section longitudinale étant compris entre 6° et 30°.

De préférence selon ce procédé, la réalisation des cavités sur le moule est obtenue par ablation laser dans la surface de moulage.

De plus, selon un mode de réalisation, on chauffe le moule pendant l'injection à une température comprise entre 160°C et 250°C. [à vérifier]

Enfin, le moulage du matériau élastomère pourra résulter d'une injection du matériau élastomère à l'état liquide dans le moule ou d'une compression à l'état solide dans le moule.

### Brève description des dessins

D'autres caractéristiques de la présente invention apparaîtront plus clairement à la lecture de la description qui va suivre, faite en référence aux dessins annexés, dans lesquels :
- la figure 1 représente une vue de côté d'une portion de surface texturée d'un article manufacturé selon l'invention, et
- la figure 2 représente une vue de dessus d'une portion de surface texturée d'un échantillon d'une pièce selon l'invention prise au microscope électronique.

### Mode(s) de réalisation de l'invention

Dans la description qui va suivre, l'invention va être présentée en relation avec la réalisation d'un article manufacturé présentant une texture de surface de type velours, tel qu'un brin de bracelet constitué d'une pièce élastomère texturée à l'aide d'un moule idoine. Cependant cette application ne saura être retenue comme limitative de la portée de la présente invention, qui s'appliquera indifféremment à la réalisation de tout type d'article manufacturé en matériau élastomère.

L'invention propose avantageusement la procuration d'un article manufacturé réalisé en matériau élastomère vulcanisé comportant sur une surface, ou plus précisément sur au moins une portion de surface, une texture de type velours obtenue intégralement dans la masse du matériau élastomère, lors d'un moulage d'une ébauche de base à l'aide d'une empreinte de moule idoine, ladite empreinte présentant une texturation de surface de moulage adaptée pour former sur une portion de surface de ladite ébauche en contact de cette portion de moule texturée une pluralité de brins de formes et dimensions telle que le toucher et la texture correspondante de ladite portion de surface de l'ébauche après moulage et refroidissement soit analogue à celle d'un velours textile.

Une telle texture velours procure avantageusement une finition, un aspect et un touché très qualitatif de type textile pour des articles en matériaux élastomères, dont l'aspect et le touché usuels, plus mâte, synthétique et caoutchouteux n'est majoritairement pas perçu comme qualitatif par les consommateurs pour les articles qui en sont constitués mais plutôt comme protecteur, résistant mécaniquement, et imperméable qui sont les propriétés recherchées en priorité pour des articles en matériaux élastomère.

Les articles manufacturés selon l'invention procurent ainsi avantageusement les mêmes avantages techniques de protection, résistance mécanique et aux fluides liquides tout en offrant un aspect et un touché très qualitatif recherché de plus en plus par les consommateurs.

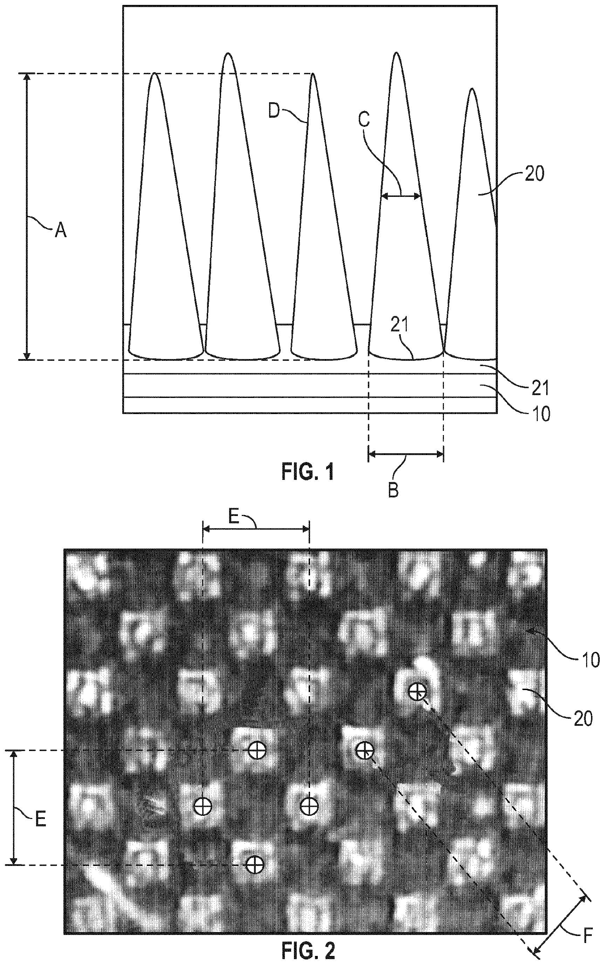

Les figures 1 et 2 représentent une portion de texture velours d'un article manufacturé selon l'invention, respectivement suivant une vue de côté (fig.1) détaillant la conformation des brins de matière et une vue de dessus (fig. 2) détaillant la disposition desdits brins les uns par rapport aux autres sur une portion de surface texturée de l'article manufacturé.

Les brins 20 font saillie sur une surface 10 sensiblement plane de l'article manufacturé 1. La surface 10 peut notamment être une surface d'une ébauche de matière élastomère qui a été moulée ou, alternativement, une feuille de matière élastomère calandrée moulée afin d'être texturée pour comporter les brins formant la texture velours de l'invention, cette feuille calandrée pouvant par la suite être apposée et fixée sur une ébauche de matière élastomère et vulcanisée avec celle-ci ou adhérée, notamment par collage.

Chaque brin 20 présente une forme sensiblement triangulaire, avec une base 21 venue de matière sur la surface 11 de l'article et qui présente une section qui décroît progressivement en s'éloignant de ladite surface 11. Comme visible sur la figure 1, chaque brin 20 est caractérisé par une hauteur A, mesurée entre sa base et sa pointe libre, une largeur ou diamètre de base B mesurée entre les extrémités de la base 21 joignant la base 21 d'un brin 20 adjacent, un diamètre à mi-hauteur C et un angle au sommet D.

Conformément à l'invention, la hauteur moyenne A des brins 20 est comprise entre 0,250 mm et 0,600 mm et la largeur moyenne B à la base est comprise entre 0,070 mm et 0,170 mm.

En outre, le diamètre moyen C à mi-hauteur est compris entre 0,025 mm et 0,060 mm et l'angle moyen D à l'extrémité libre des brins, mesuré à l'intersection entre les droites tangentes aux surfaces du brin 20 à ladite extrémité est compris entre 6 et 30°.

En outre, comme le montre plus particulièrement la fig. 2, l'entraxe E entre les centres des bases 21 de deux brins 20 consécutifs suivant deux directions orthogonales X, Y dans le plan de la surface 10 sur laquelle lesdits brins saillent est compris entre 0,075 mm et 0,300 mm, la densité des brins 20 sur la portion texturée elle étant au moins égale à 10 brins par mm2.

Une conformation et une répartition des brins 20 telle que précédemment définies sur la surface ou portion de surface 10 d'un article manufacturé selon l'invention procure avantageusement une texture de type velours comparable à des fibres de l'ordre de 1,5 à 1,7 DTEX, procurant un toucher extrêmement soyeux de fibres courtes et denses, à la fois souple et résistant, sans rugosité ni abrasion au contact manuel.

L'article manufacturé de l'invention comporte au moins une peau, c'est-à-dire une couche externe constituée de matériau élastomère, ou bien est intégralement formé de matériau élastomère vulcanisé, dont une surface 10 ou portion de surface 10 libre est texturée conformément à l'invention.

A titre d'exemple, les élastomères utilisés pour réaliser l'objet manufacturé 10 de l'invention peuvent être choisis parmi les élastomères généraux, tels que du caoutchouc naturel, du polyisoprène, un copolymère de butadiène et de styrène, connu sous l'abréviation SBR, ou encore, du polybutadiène. Les élastomères peuvent également être choisis parmi les élastomères spéciaux, comme par exemple un copolymère d'isobutylène et d'isoprène, connu sous l'abréviation d'IIR, du polychloroprène, un copolymère d'éthylène et de propylèn-diène, connu sous le nom d'EPDM, ou encore un copolymère d'éthylène et de propylène, connu sous le nom d'EPM.

Ledit objet manufacturé pourra notamment être constitué d'une ou plusieurs feuilles de matière élastomère calandrée telle que précédemment défini. Les feuilles de matière calandrée peuvent être assemblées les unes sur les autres par vulcanisation, de manière classique en soit pour la fabrication de pièces en élastomère, pour former une ébauche comme précédemment évoqué aux fins de moulage de l'article manufacturé de l'invention. Chaque feuille de matière calandrée constituant l'ébauche pourra notamment être d'une épaisseur comprise de préférence entre 0,5 mm et 10 mm, de préférence encore comprise entre 1 mm et 3 mm.

L'objet manufacturé selon l'invention peut avantageusement être obtenu par la mise en oeuvre d'un procédé de moulage tel que décrit ci-après.

Une première étape consiste tout d'abord à se doter d'une préparation de matière élastomère choisie parmi les composants de bases sus-évoqués. La préparation de matière élastomère est essentiellement constituée dans un premier temps d'une base liquide de matériau élastomère, par exemple de caoutchouc naturel, d'EPDM ou d'EPM, que l'on mélange de manière à obtenir un mélange homogène.

On réserve ensuite cette préparation sous forme liquide ou encore de feuilles calandrées crues, destinées à la réalisation d'ensembles vulcanisés avec d'autres composants de matière élastomère, identiques ou de nature complémentaire afin de pouvoir être réticulés ensemble.

On moule ensuite la préparation élastomère dans un moule dont une surface de moulage texturée afin de comporter sur au moins une portion de surface de moulage une pluralité de cavités ayant une hauteur moyenne h et une largeur moyenne l à la base conformes aux dimensions A et B des brins 20 de la texture de l'objet manufacturé réalisé telles que précédemment évoqués.

Les cavités du moule peuvent avantageusement être disposées de façon à former une structure analogue à un "nid d'abeille", qui présente l'avantage d'organiser de manière régulière sur la surface texturée du moule et donc de la pièce moulée les cavités, respectivement les brins 20, afin de maîtriser l'ordonnancement et l'espacement desdits brins 20 notamment dans la pièce moulée. En outre, cela permet de réduire les surfaces résiduelles entre les bases des brins moulés en permettant un fluage régulier de la matière élastomère fluide dans le moule, indépendamment des pressions d'injection ou des effets dynamiques de la matière liquide dans le moule lors de l"injection.

L'usinage des cavités dans la surface de moulage peut être réalisé au moyen d'un faisceau laser par exemple.

Le moulage s'effectue de telle sorte que la matière élastomère injectée dans le moule soit au moins partiellement vulcanisée, à une température comprise entre 160°C et 250°C.

Alternativement à une injection de matière élastomère liquide dans un moule, on peut également réaliser l'objet manufacturé de l'invention par moulage d'une feuille calandrée de matière élastomère telle que précédemment définie, donc à l'état solide, comprimé dans le moule.

A titre indicatif, cinq différents échantillons d'articles manufacturés conformes à la présente invention ont été réalisés par moulage tel que précédemment présenté. Ces différents échantillons ont ensuite été soumis à analyse dimensionnelles de leurs structures et notamment de leurs brins 20, afin de vérifier leur conformité avec les paramètres dimensionnels souhaités de la présente invention.

Les mesures caractéristiques des différents échantillons réalisés sont rapportées ci-après dans le tableau 1.

Il est intéressant de noter que les échantillons 1 et 5, constituant respectivement les échantillons dont les brins sont de dimensions les plus réduites et les plus grandes, respectivement, en termes de hauteur moyenne A et de diamètre de base B à tout le moins, constituent des exemples extrêmes de structuration velours satisfaisante au sens de la présente invention. En effet, il s'est avéré extrêmement délicat, pour ne pas dire impossible, de réaliser une structuration uniforme de brins 20 de hauteur inférieure à la hauteur moyenne A de l'échantillon 1, notamment avec des brins individuellement distincts les uns des autres pour procurer l'effet de touché soyeux, analogue au velours, souhaité pour l'invention, sans qu'une rugosité et une friction trop importante n'apparaissent au touché.

Par ailleurs, des hauteurs et largeurs de brins supérieures à celles de l'échantillon 5 tendent à procurer des brins plus larges, dont les extrémités sont moins effilées, et de texture non plus soyeuse mais filaire, donc avec un rendu qualitatif moindre pour le consommateur, notamment pour des articles manufacturés d'habillage tels que des brins de bracelets, des cadrans, ou autres pièces d'habillage de montres et de bijoux par exemple.

**Tableau 1 :**

| **Échantillon** | **A** | **B** | **C** | **D** | **E** | **F** |
|---|---|---|---|---|---|---|
| | **Hauteur moyenne (mm)** | **Diamètre Base (mm)** | **Diamètre mi-hauteur (mm)** | **Angle (degré)** | **Entre axe X-Y (mm)** | **Entre axe diagonal (mm)** |
| **1** | 0,276 | 0,074 | 0,029 | 12,033 | 0,075 | 0,111 |
| **2** | 0,428 | 0,071 | 0,034 | 6,776 | 0,12 | 0,171 |
| **3** | 0,508 | 0,109 | 0,042 | 10,851 | 0,11 | 0,159 |
| **4** | 0,569 | 0,146 | 0,056 | 26,4 | 0,24 | 0,17 |
| **5** | 0,607 | 0,171 | 0,046 | 23 | 0,30 | 0,22 |

L'invention procure ainsi des articles manufacturés en matériaux élastomères dotés d'une texture velours analogue à un velours textile et présentant un rendu et un touché qualitatifs, particulièrement adéquat pour la réalisation de pièces en tous genre, notamment d'habillage pour l'horlogerie et la joaillerie, et par exemple de brins de bracelets.

L'invention pourra également s'appliquer à la fabrication de pièces texturées en élastomère ou matériaux thermoplastiques pour d'autres industries et application et notamment pour la cordonnerie, la lunetterie, les biens de consommation et téléphonie, l'automobile, notamment les pièces d'intérieurs, la maroquinerie, la décoration ou encore le packaging.

## Revendications

1. Article manufacturé formé essentiellement d'un matériau élastomère, ledit article présentant au moins une surface visible (10) comportant sur au moins une portion texturée une pluralité de brins (20) s'étendant depuis une base (21) de ladite surface et répartis sur la totalité de ladite portion, chaque brin (20) ayant une hauteur moyenne A mesurée depuis ladite base jusqu'à une extrémité libre du brin telle que 0,250 mm ≤ A ≤ 0,600 mm et une largeur moyenne B à la base telle que 0,070 mm ≤ B ≤ 0,170 mm, et la densité des brins (20) sur la portion texturée étant au moins égale à 10 brins par unité de surface exprimée en millimètre carré (mm²), **caractérisé en ce que** l'angle moyen (D) à l'extrémité libre des brins (20), mesuré à l'intersection entre les tangentes aux surfaces du brin (20) à ladite extrémité dans une section longitudinale est compris entre 6° et 30°.

2. Article selon la revendication 1, **caractérisé en ce que** le diamètre moyen (C) des brins (20) à mi-hauteur est compris entre 0,025 mm et 0,060 mm.

3. Article selon l'une quelconque des revendications 1 et 2, **caractérisé en ce que** la section de chaque brin (20) diminue en allant de la base du brin vers l'extrémité dudit brin.

4. Article selon l'une des revendications 1 à 3, **caractérisé en ce que** l'entraxe (E) entre les centres des bases (21) de deux brins (20) consécutifs suivant deux directions orthogonales dans le plan de la surface est compris entre 0,075 mm et 0,300 mm.

5. Article selon l'une quelconque des revendications 1 à 4, **caractérisé en ce que** ledit article est un brin de bracelet.

6. Article selon l'une quelconque des revendications précédentes, **caractérisée en ce que** le matériau élastomère est un matériau élastomère vulcanisé.

7. Procédé de fabrication d'un article manufacturé selon l'une des revendications 1 à 6, tel qu'il consiste à mouler un matériau élastomère dans un moule dont une surface de moulage comporte sur au moins une portion de surface de moulage une pluralité de cavités ayant une hauteur moyenne h mesurée depuis ladite base jusqu'à une extrémité libre du brin telle que 0,250 mm≤ h ≤ 0,600 mm et une largeur moyenne l à la base telle que 0,070 mm ≤ l ≤ 0,170 mm, la densité des cavités étant au moins égale à 10 par unité de surface exprimée en millimètre carré (mm²), l'angle moyen à l'extrémité libre des cavités, mesuré à l'intersection entre les tangentes aux surfaces de la cavité à ladite extrémité dans une section longitudinale étant compris entre 6° et 30°.

8. Procédé selon la revendication 7, **caractérisé en ce que** la réalisation des cavités sur le moule est obtenue par ablation laser dans la surface de moulage.

9. Procédé la revendication 7 ou 8, **caractérisé en ce que** l'on chauffe le moule pendant l'injection à une température comprise entre 160°C et 250°C.

10. Procédé selon l'une des revendications 7 à 9, **caractérisé en ce que** le matériau élastomère est injecté à l'état liquide dans le moule ou comprimé à l'état solide dans le moule.

## Patentansprüche

1. Gefertigter Gegenstand, im Wesentlichen gebildet aus einem Elastomermaterial, wobei der besagte Gegenstand mindestens eine sichtbare Oberfläche (10) aufweist, die auf mindestens einem strukturierten Abschnitt eine Vielzahl von Strängen (20) umfasst, die sich ausgehend von einer Basis (21) der besagten Oberfläche erstrecken und über die Gesamtheit des besagten Abschnitts verteilt sind, wobei jeder Strang (20) eine durchschnittliche Höhe A gemessen ab der besagten Basis bis zu einem freien Ende des Strangs von beispielsweise 0,250 mm ≤ A ≤ 0,600 mm und eine durchschnittliche Breite B an der Basis von beispielsweise 0,070 mm ≤ B ≤ 0,170 mm hat, und die Dichte der Stränge (20) auf dem strukturierten Abschnitt mindestens 10 Stränge pro in Quadratmillimetern (mm²) angegebener Flächeneinheit beträgt, **dadurch gekennzeichnet, dass** der durchschnittliche Winkel (D) am freien Ende der Stränge (20) gemessen am Schnittpunkt zwischen den Tangenten zu den Oberflächen des Strangs (20) an dem besagten Ende in einem Längsquerschnitt zwischen 6° und 30° liegt.

2. Gegenstand nach Anspruch 1, **dadurch gekennzeichnet, dass** der durchschnittliche Durchmesser (C) der Stränge (20) auf halber Höhe zwischen 0,025 mm und 0,060 mm liegt.

3. Gegenstand nach einem der Ansprüche 1 und 2, **dadurch gekennzeichnet, dass** der Querschnitt jedes Strangs (20) ausgehend von der Basis des Strangs bis zum Ende des besagten Strangs abnimmt.

4. Gegenstand nach einem der Ansprüche 1 bis 3, **dadurch gekennzeichnet, dass** der Mittenabstand (E) zwischen den Mittelpunkten der Basen (21) von zwei aufeinanderfolgenden Strängen (20) in zwei orthogonalen Richtungen in der Ebene der Oberfläche zwischen 0,075 mm und 0,300 mm liegt.

5. Gegenstand nach einem der Ansprüche 1 bis 4, **dadurch gekennzeichnet, dass** der besagte Gegenstand ein Armbandstrang ist.

6. Gegenstand nach einem der vorstehenden Ansprüche, **dadurch gekennzeichnet, dass** das Elastomermaterial ein vulkanisiertes Elastomermaterial ist.

7. Herstellungsverfahren eines nach einem der Ansprüche 1 bis 6 gefertigten Gegenstands, beispielsweise wie beim Formen eines Elastomermaterials in einer Form, deren eine Oberfläche zum Formen auf mindestens einem Abschnitt der Oberfläche zum Formen eine Vielzahl von Hohlräumen umfasst, die eine durchschnittliche Höhe h gemessen ab der besagten Basis bis zu einem freien Ende des Strangs von beispielsweise 0,250 mm ≤ h ≤ 0,600 mm und eine durchschnittliche Breite I in der Basis von beispielsweise 0,070 mm ≤ l ≤ 0,170 mm haben, wobei die Dichte der Hohlräume mindestens 10 pro in Quadratmillimetern (mm²) angegebener Flächeneinheit beträgt, der durchschnittliche Winkel am freien Ende der Hohlräume gemessen am Schnittpunkt zwischen den Tangenten zu den Oberflächen des Hohlraums an dem besagten Ende in einem Längsquerschnitt zwischen 6° und 30° liegt.

8. Verfahren nach Anspruch 7, **dadurch gekennzeichnet, dass** die Ausführung der Hohlräume auf der Form durch Laserabtragung in der Oberfläche zum Formen erhalten wird.

9. Verfahren nach Anspruch 7 oder 8, **dadurch gekennzeichnet, dass** die Form während des Einspritzens auf eine Temperatur zwischen 160 °C und 250 °C erhitzt wird.

10. Verfahren nach einem der Ansprüche 7 bis 9, **dadurch gekennzeichnet, dass** das Elastomermaterial im flüssigen Zustand in die Form gespritzt oder im festen Zustand in die Form gepresst wird.

## Claims

1. Manufactured article formed essentially of an elastomeric material, said article having at least one visible surface (10) comprising on at least one textured portion a plurality of strands (20) extending from a base (21) of said surface and distributed over the entirety of said portion, each strand (20) having an average height A measured from said base up to a free end of the strand such that 0.250 mm ≤ A ≤ 0.600 mm and an average width B at the base such that 0.070 mm ≤ B ≤ 0.170 mm, and the density of the strands (20) on the textured portion being at least equal to 10 strands per unit of surface expressed in square millimetres (mm²), **characterised in that** the average angle (D) at the free end of the strands (20), measured at the intersection between the tangents to the surfaces of the strand (20) at said end in a longitudinal section, is between 6° and 30°.

2. Article according to Claim 1, **characterised in that** the average diameter (C) of the strands (20) at mid-height is between 0.025 mm and 0.060 mm.

3. Article according to any one of Claims 1 and 2, **characterised in that** the section of each strand (20) decreases, going from the base of the strand towards the end of said strand.

4. Article according to one of Claims 1 to 3, **characterised in that** the centre distance (E) between the centres of the bases (21) of two consecutive strands (20) in two orthogonal directions in the plane of the surface is between 0.075 mm and 0.300 mm.

5. Article according to any one of Claims 1 to 4, **characterised in that** said article is a strand of a strap.

6. Article according to any one of the preceding Claims, **characterised in that** the elastomeric material is a vulcanised elastomeric material.

7. Method for producing a manufactured article according to any one of Claims 1 to 6 such that it consists of moulding an elastomeric material in a mould having a moulding surface which includes on at least one moulding surface portion a plurality of cavities having an average height h measured from said base up to a free end of the strand such that 0.250 mm ≤ h≤ 0.600 mm and an average width I at the base such that 0.070 mm ≤ I ≤ 0.170 mm, the density of the cavities being at least equal to 10 per unit of surface expressed in square millimetres (mm²), the average angle at the free end of the cavities, measured at the intersection between the tangents to the surfaces of the cavity at said end in a longitudinal section, being comprised between 6° and 30°.

8. The method according to Claim 7, **characterised in that** the making of the cavities on the mould is obtained by laser ablation in the moulding surface.

9. The method according to Claim 7 or 8, **characterised in that** the mould is heated during the injection to a temperature between 160°C and 250°C.

10. The method according to any one of Claims 7 to 9, **characterised in that** the elastomeric material is injected in the liquid state into the mould or compressed in the solid state in the mould.
